# EUROPEAN PATENT APPLICATION

(11) **EP 4 687 190 A1**
(43) Date of publication of application: **04.02.2026**
(21) Application number: 25192525.1
(22) Date of filing: 29.07.2025
(51) Int. Cl.: H01M 10/0585, H01M 50/183, H01M 50/463, H01M 50/471, H01M 50/595

(54) **SECONDARY BATTERY, SECONDARY BATTERY MANUFACTURING DEVICE AND SECONDARY BATTERY MANUFACTURING METHOD USING THE SAME**

(30) Priority: 29.07.2024 KR 20240100399; 08.05.2025 KR 20250059709
(71) Applicant: SK On Co., Ltd., Seoul 03161 (KR)
(72) Inventor: YOON, Won Sok, 34124 Daejeon (KR); KIM, Sung Yeop, 34124 Daejeon (KR)
(74) Representative: Prüfer & Partner mbB Patentanwälte · Rechtsanwälte

(57) **Abstract**

A secondary battery according to an exemplary embodiment of the present disclosure includes an electrode assembly including separators stacked to enclose each of a plurality of electrode plates disposed therein; and a separator coupling part disposed on one side of the electrode assembly to support the separators, wherein the separator coupling part includes an internal coupling part disposed on an inner side of an edge of the separator to couple at least partial regions of the separators that face each other.

## Description

### [BACKGROUND OF THE INVENTION]

### 1. Field of the Invention

The present disclosure relates to a secondary battery, a device for manufacturing a secondary battery, and a method for manufacturing a secondary battery using the device.

### 2. Description of the Related Art

Various types of secondary batteries are used as energy sources in electric vehicles or electronic devices. In the secondary batteries, a jelly-roll-type electrode assembly, in which an anode plate, a cathode plate and a separator are wound together, is used, or alternatively, an electrode assembly fabricated by stacking an anode plate, a cathode plate, and a separator in an appropriate order may be used.

This electrode assembly is accommodated in a battery housing and connected to an anode terminal and a cathode terminal. The housing is then sealed after being filled with an electrolyte.

### [SUMMARY OF THE INVENTION]

The present disclosure proposes a secondary battery capable of enhancing electrode alignment, a device for manufacturing a secondary battery, and a method for manufacturing a secondary battery using the device.

A secondary battery according to exemplary embodiments of the present disclosure may include: an electrode assembly comprising separators stacked to enclose each of a plurality of electrode plates disposed therein; and a separator coupling part disposed on one side of the electrode assembly to support the separators, wherein the separator coupling part may include an internal coupling part disposed on an inner side of an edge of the separator to couple at least partial regions of the separators that face each other.

In exemplary embodiments, the separator coupling part may include an external coupling part disposed on an outer side of the edge of the separator to couple the separators.

In exemplary embodiments, the internal coupling part may include a first coupling part disposed on at least one longitudinal side of the electrode plate within the separator.

In exemplary embodiments, the internal coupling part may include a second coupling part disposed on at least one lateral side of the electrode plate within the separator.

In exemplary embodiments, the first coupling part and the second coupling part may be disposed to be connected to each other.

In exemplary embodiments, the first coupling part and the second coupling part may be disposed to be spaced apart from each other.

In exemplary embodiments, the internal coupling part may be injected from the outer side of the edge of the separator toward the electrode plate.

In exemplary embodiments, the internal coupling part may be injected from the inner side of the edge of the separator.

In exemplary embodiments, the secondary battery may further include a support film configured to tape at least partial regions of the separators, wherein the support film may include an external support region disposed across the outer side of the edge of the separator in the stacking direction.

In exemplary embodiments, the support film may include an internal support region that is connected to an end of the external support region and is in contact with an outer surface of the separator disposed at the outermost side in the stacking direction of the electrode assembly.

In exemplary embodiments, at least a portion of the external support region may be in contact with the external coupling part.

In exemplary embodiments, at least a portion of the external support region may be disposed to be spaced apart from the edge of the separator by a predetermined gap.

In exemplary embodiments, at least one through-hole penetrating in the stacking direction may be formed in the separators, and the internal coupling part may be disposed to be continuous through the through-hole.

In exemplary embodiments, an end of the internal coupling part in the stacking direction may be coupled to the outer surface of the separator disposed at the outermost side in the stacking direction of the electrode assembly.

In exemplary embodiments, the internal coupling part may be disposed in a portion of the separator that does not face the electrode plate, and the electrode assembly may have a thickness in the stacking direction such that the stacking-direction thickness of the portion where the internal coupling part is disposed is smaller than that of the portion where the separator faces the electrode plate.

A device for manufacturing a secondary battery according to exemplary embodiments of the present disclosure may include: a body part configured to penetrate at least some of a plurality of separators that are stacked to form an electrode assembly in the stacking direction; a main flow path extending in a longitudinal direction of the body part within the body part; and a sub flow path branching from one side of the main flow path and having an end in communication with the outside through an outer surface of the body part, wherein the secondary battery manufacturing device may provide a separator coupling part between the separators that face each other through the main flow path and the sub flow path, while the body part penetrates at least some of the separators.

In exemplary embodiments, a plurality of sub flow paths may be disposed to be spaced apart from each other.

In exemplary embodiments, the body part may include a tapered section whose diameter decreases toward a longitudinal end.

A method for manufacturing a secondary battery according to exemplary embodiments of the present disclosure may include: a coupling step of coupling a plurality of separators, which are stacked to be spaced apart from each other, to each other using a separator coupling part; and a taping step of taping at least partial regions of the separators using a support film, wherein the support film may be disposed such that its inner surface is in contact with at least a portion of the separator coupling part.

In exemplary embodiments, in the coupling step, the separator coupling part may be injected from an inner side of an edge of the separator.

The secondary battery according to various embodiments of the present disclosure may enhance the alignment of electrode plates within the electrode assembly.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view of a secondary battery including a separator coupling part in an exemplary embodiment of the present disclosure;
FIG. 2 is a schematic cross-sectional view of the secondary battery including the separator coupling part and a support film in an exemplary embodiment of the present disclosure;
FIG. 3 is a view schematically illustrating an internal coupling part according to an exemplary embodiment of the present disclosure;
FIGS. 4 and 5 are perspective views schematically illustrating a state in which the support film is disposed in an exemplary embodiment of the present disclosure;
FIG. 6 is a cross-sectional view schematically illustrating a device for manufacturing a secondary battery according to an exemplary embodiment of the present disclosure;
FIGS. 7 to 9 are cross-sectional views schematically illustrating a secondary battery including a separator coupling part in another embodiment of the present disclosure, respectively;
FIG. 10 is a flowchart of a method for manufacturing a secondary battery according to an exemplary embodiment of the present disclosure; and
FIG. 11 is a graph showing the effect of enhanced electrode alignment through the secondary battery according to an exemplary embodiment of the present disclosure.

### [DETAILED DESCRIPTION OF THE INVENTION]

The embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe his or her invention, they should be interpreted based on the meanings and concepts that meet the technical ideas of the present disclosure.

The terms used herein are provided to describe specific embodiments and are not intended to limit the present disclosure. As used herein, the singular form may include the plural form unless the context clearly dictates otherwise.

In addition, when used to describe and define the present disclosure, terms such as "comprise," "include," "consist of," and "have" should be interpreted in a non-exclusive manner. Unless explicitly stated otherwise, these terms should be construed to imply that the presence of the corresponding component, and thus should not be interpreted to exclude the presence of other components but rather to include them.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to facilitate understanding of the relationship between an element or feature and another element or feature illustrated in the drawings. These space-related terms are provided to facilitate understanding of the present disclosure in their various process or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" or "below" depending on orientation.

The embodiments described in this specification and the configurations illustrated in the drawings merely represent the most preferred embodiments of the present disclosure but do not encompass all technical ideas of the present disclosure. Thus, it should be understood that various modifications and equivalents may be implemented at the time of filing the present application. In addition, the publicly known functions and configurations that are deemed unnecessary for clarifying the essence of the present invention will not be described.

The secondary battery described in the present disclosure may include any type of conventional battery cell capable of converting the chemical energy of materials stored in the battery into electrical energy, and capable of supporting multiple charge/discharge cycles. For example, the secondary battery described in the present disclosure may include a lithium secondary battery.

The secondary battery of the present disclosure may be widely applied in green technology fields, such as electric vehicles, battery charging stations, as well as solar power generation, wind power generation, and the like, which use the batteries. The secondary battery of the present disclosure may be used in eco-friendly electric vehicles, hybrid vehicles, and the like, which are aimed at mitigating climate change by reducing air pollution and greenhouse gas emissions.

Hereinafter, secondary batteries according to various embodiments of the present disclosure will be described in detail with reference to the accompanying drawings.

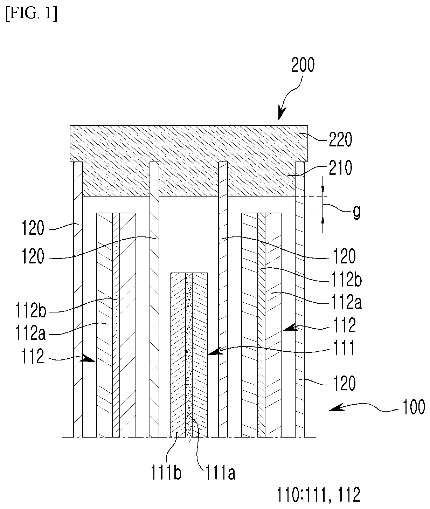

FIG. 1 is a schematic cross-sectional view of a secondary battery including a separator coupling part 200 in an exemplary embodiment of the present disclosure.

Referring to FIG. 1, a secondary battery according to various embodiments of the present disclosure may include an electrode assembly 100 and the separator coupling part 200.

In addition, the secondary battery may further include an outer case (not shown) that encloses the electrode assembly 100 and the separator coupling part 200. However, the outer case applicable herein may have any shape or material known at the time of filing of the present disclosure, and thus a detailed description thereof will be omitted so as not to obscure the features of the present disclosure.

Meanwhile, in the drawings attached to this specification, the separator 120 and an electrode plate 110 are illustrated as being spaced apart from each other merely to aid in understanding the invention, and it should be understood that the separator 120 and the electrode plate 110, which constitute the actual electrode assembly 100, are stacked in contact with each other.

The electrode assembly 100 may include the electrode plate 110 and the separator 120. For example, the electrode assembly 100 may include the separator 120 disposed between a plurality of electrode plates 110.

The electrode plates 110 may include a first electrode plate 111 and a second electrode plate 112, which are provided to have different polarities. Herein, unless otherwise specified, it should be understood that the electrode plate 110 refers to either or both of the first electrode plate 111 and the second electrode plate 112.

The first electrode plate 111 and the second electrode plate 112 may each include an electrode coating layer and a current collector.

The first electrode plate 111 may be either a cathode plate or an anode plate. When the first electrode plate 111 is a cathode plate, the second electrode plate 112 may be an anode plate, and when the first electrode plate 111 is an anode plate, the second electrode plate 112 may be a cathode plate.

For example, the first electrode plate 111 may be a cathode plate. In an exemplary embodiment, the first electrode plate 111 may include a first current collector 111b in the form of a metal foil and a first electrode coating layer 111a formed by applying a first electrode active material to the first current collector 111b. For example, the first current collector may include aluminum.

In an exemplary embodiment, the first electrode coating layer may be an electrically conductive coating, and may include a cathode active material. For example, the cathode active material may include lithium nickel manganese cobalt oxide (NMC), lithium manganese oxide (LMO), lithium iron phosphate (LFP), lithium cobalt oxide (LCO), lithium titanate (LTO), or a chalcogenide compound (such as LiTiS₂), but it is not limited thereto, and any cathode active material known to those skilled in the art may be used.

In an exemplary embodiment, the first current collector 111b may include a first coated part on which the first electrode coating layer 111a is formed and a first uncoated part on which no first electrode active material is coated.

The second electrode plate 112 may be either a cathode plate or an anode plate. For example, the second electrode plate 112 may be an anode plate. In an exemplary embodiment, the second electrode plate 112 may include a second current collector 112b in the form of a metal foil and a second electrode coating layer 112a formed by applying a second electrode active material to the second current collector 112b. For example, the second current collector 112b may include copper or nickel.

In an exemplary embodiment, the second electrode coating layer 112a may be an electrically conductive coating, and may include an anode active material. For example, the anode active material may include a silicon material (e.g., metallic silicon and silicon dioxide), a carbon-based material (e.g., graphite materials, graphene-containing materials, hard carbon, soft carbon, carbon nanotubes, porous carbon, or conductive carbon), a tin-based material, or a metal oxide, but it is not limited thereto, and any anode active material known to those skilled in the art may be used.

In an exemplary embodiment, the second current collector 112b may include a second coated part on which the second electrode coating layer 112a is formed and a second uncoated part on which no second electrode coating layer is formed.

The separator 120 may be interposed between the first electrode plate 111 and the second electrode plate 112 to prevent the first electrode plate 111 and the second electrode plate 112 from being electrically connected to each other and causing a short circuit. In an exemplary embodiment, the separator 120 may include an electrically insulating material. For example, the separator 120 may include a polymeric material. For example, the separator 120 may include polyethylene, polypropylene, or a combination thereof, but it is not limited thereto.

The electrode assembly 100 may include the above-described first electrode plate 111, the separator 120, and the second electrode plate 112, which are stacked with one another.

For example, the electrode assembly 100 may include the first electrode plate 111, the separator 120, and the second electrode plate 112, which are stacked in a folding structure or a Z-folding structure. However, this is merely illustrative, and the electrode assembly 100 of the present disclosure is not limited to a particular stacking structure. For example, the electrode assembly 100 may be wound in a jelly-roll shape.

For example, the electrode assembly 100 may have a plurality of electrode plates 110 respectively disposed between the separators 120. For instance, the separators 120 may be disposed on the outermost sides of the electrode assembly 100 in the stacking direction. The electrode plates 110 of the electrode assembly 100 may not be exposed to the outside by being enclosed by the separators 120.

For example, the separator 120 may be disposed to have a larger area than the electrode plates 110, so that the entire surface area of the electrode plates 110 is covered by the separator 120.

In an exemplary embodiment, the first uncoated part and the second uncoated part may be exposed to the outside at one side and the other side of the electrode assembly 100, respectively. For example, the first uncoated part and the second uncoated part may be disposed on one side of the electrode assembly 100 so as to be spaced apart from each other. For example, the first uncoated part and the second uncoated part may be exposed to the outside at both axial ends of the electrode assembly 100. The first uncoated part and the second uncoated part, which are exposed to the outside of the electrode assembly 100, may define electrode tabs 113.

For example, at least some regions of the first uncoated part and the second uncoated part, which are stacked on each other, may be disposed outside the edge of the separator 120 to respectively form bundles of electrode tabs 113. Electrode leads may be coupled to the respective bundles of electrode tabs 113.

In an exemplary embodiment, the electrode assembly 100 may be stacked in a Z-folding manner, but it is not limited thereto.

For example, the electrode assembly 100 may be configured by alternately interposing the first electrode plate 111 and the second electrode plate 112 between the separators 120 that are folded in a zigzag manner.

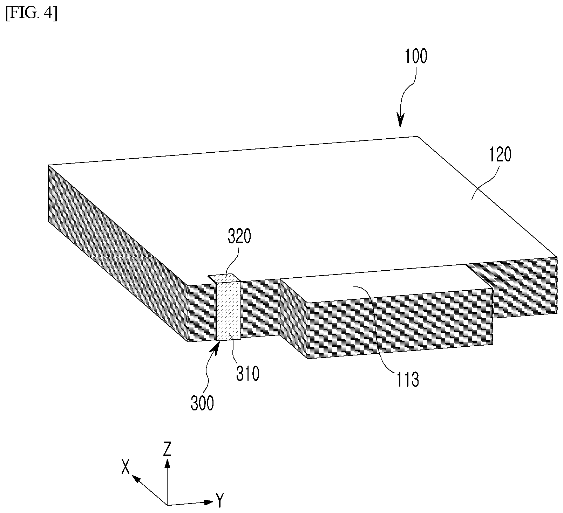

In the description of the present disclosure, a direction parallel to the direction in which the electrode tabs 113 are exposed in the electrode assembly 100 may be referred to as the longitudinal direction (for example, the X-axis direction in FIG. 4). In addition, a direction perpendicular to the longitudinal direction of the electrode assembly 100, that is, a direction parallel to the folding direction of the separator 120 in the Z-folding structure may be referred to as the width direction (for example, the Y-axis direction in FIG. 4). In addition, a direction in which the separator 120 and the electrode plate 110 are stacked in the electrode assembly 100 may be referred to as the stacking direction (for example, the Z-axis direction in FIG. 4).

In an exemplary embodiment, a manufacturing process of a secondary battery is a subsequent process to the stacking of the separator 120 and the electrode plate 110 to form the electrode assembly 100, in which the bundles of electrode tabs 113, exposed outside the edge of the separator 120, are gathered together in the stacking direction and pre-welded or joined to electrode leads.

The bundles of electrode tabs 113 may be electrically connected to the outside through the electrode leads.

In an exemplary embodiment, the electrode assembly 100, in which the bundles of electrode tabs 113 and the electrode leads are connected, may be enclosed by an outer casing. For example, the outer casing forming the secondary battery may include a pouch-shaped outer casing, but it is not limited thereto, and may also include a prismatic outer casing. For instance, the pouch-shaped outer casing may have its edges sealed while accommodating the electrode assembly 100 and the electrolyte therein.

Meanwhile, when the electrode assembly 100 undergoes the above-described subsequent process, the alignment of the first electrode plate 111 and the second electrode plate 112, which were initially stacked, may become misaligned, potentially resulting in a decrease in energy density compared to the initial design.

For example, in the case of the Z-folding manner in which the separator 120 is folded in a zigzag shape to form the electrode assembly 100, complete detachment of the electrode plate 110 may be prevented in the folding direction of the separator 120 (e.g., the widthwise direction). However, misalignment of the electrode plates 110 may still occur since the electrode plates 110 are stacked without a separate adhesive means.

In addition, in the case where the bundles of electrode tabs 113 are pre-welded, complete detachment of the electrode plate 110 in the direction in which the electrode tabs 113 are exposed (e.g., the lengthwise direction) may be prevented. However, even in this case, misalignment of the electrode plate 110 in the lengthwise direction and/or widthwise direction may still occur.

Further, in the process of forming the electrode assembly 100 by stacking the separator 120 and the electrode plate 110, if the surfaces where the separator 120 and the electrode plate 110 come into contact are bonded using a separate adhesive means, misalignment of the electrode plate 110 may be prevented. However, the use of the adhesive means may hinder the migration of lithium (Li) ions required for charging and discharging of the lithium secondary battery, potentially resulting in deterioration of the battery performance.

In the present disclosure, a secondary battery may be proposed in which each electrode plate 110 is prevented from being detached and misaligned in the electrode assembly 100 including the separator 120 disposed between a plurality of electrode plates 110.

Referring to FIG. 1 again, a secondary battery according to an exemplary embodiment may include the separator coupling part 200.

The separator coupling part 200 may be disposed on one side of the above-described electrode assembly 100 to support the separator 120. The separator coupling part 200 may couple and support at least some of the separators 120 disposed between the electrode plates 110.

The separator coupling part 200 may include a coupling means capable of coupling the separators 120 to each other. The term "coupling" in this specification is interpreted to include all forms of physical, chemical and/or functional connection, including joining methods such as adhesion, welding, fastening, mechanical bonding, or the like.

In an exemplary embodiment, the separator coupling part 200 may include an adhesive capable of bonding the separators 120 to each other. The separator coupling part 200 may include an adhesive having adhesiveness and viscosity.

However, for ease of understanding the invention, the separator coupling part 200 may be described as including an adhesive capable of joining the separators 120 to each other. This is merely illustrative, and the separator coupling part 200 may include any coupling means known at the time of filing, as long as it can couple the stacked separators 120 to each other.

For example, the separator coupling part 200 may include polyvinylidene fluoride (PVDF), but it is not limited thereto.

For example, the separator coupling part 200 may include a hot melt material having high viscosity. For example, the separator coupling part 200 may include a polymer-based thermoplastic adhesive such as ethylene-vinyl acetate (EVA), polyamide (PA), polyolefin (PO), styrene-butadiene-styrene (SBS), or styrene-isoprene-styrene (SIS), but it is not limited thereto. For example, the separator coupling part 200 may also include a paraffin wax-based adhesive.

For example, the separator coupling part 200 may include a curable material having relatively low viscosity. For example, the separator coupling part 200 may include a material that develops adhesive strength as its molecular structure is fixed through heat, ultraviolet (UV) light, or a chemical reaction. For instance, the separator coupling part 200 may include epoxy, polyurethane (PU), polyimide, phenolic resin, or UV-curable materials, but it is not limited thereto.

In the present disclosure, suitable materials may be used depending on the required separator coupling part 200, such as an external coupling part 220, an internal coupling part 210, and/or a first coupling part 211 and a second coupling part 212 of the internal coupling part 210 described below. For example, when the separator coupling part 200 needs to be supplied to a location far from the injection point, a material having relatively low viscosity may be used. However, this is merely illustrative and is not limited thereto.

For example, the separator coupling part 200 may be applied to one side of the separator 120 in the electrode assembly 100. The separator coupling part 200 may be applied to one side of the separator 120 to provide adhesive strength between the separators 120.

The separator coupling part 200 may include the internal coupling part 210 that is positioned on an inner side of the edge of the separator 120 to mutually couple at least partial regions of the separators 120 that face each other.

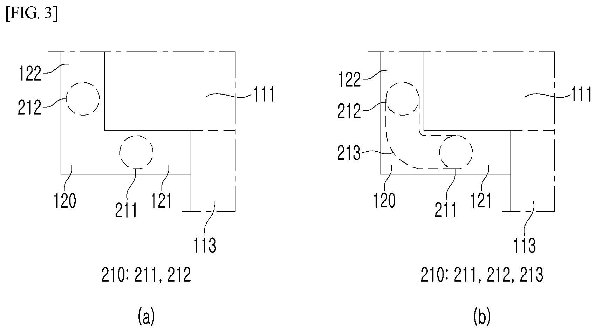

FIG. 3 is a view schematically illustrating the internal coupling part 210 according to an exemplary embodiment of the present disclosure.

Referring to FIG. 3, the internal coupling part 210 may be disposed in a region of the separator 120 where the electrode plate 110 was not present, so that a plurality of separators 120 are mutually coupled. For example, the internal coupling part 210 may be disposed at a predetermined gap (e.g., g in FIG. 1) from the electrode plate 110.

In an exemplary embodiment, the internal coupling part 210 may include the first coupling part 211 disposed on at least one longitudinal side of the electrode plate 110 within the separator 120. The internal coupling part 210 may include the first coupling part 211 disposed in a first region 121 on at least one longitudinal side of the electrode plate 110 within the separator 120.

For example, the first coupling part 211 may be disposed outside one end and/or the other end of the electrode plate 110 in the longitudinal direction of the separator 120. The first coupling part 211 may prevent the electrode plate 110 from moving in the longitudinal direction inside the separator 120.

For example, the first coupling part 211 may be disposed to be spaced apart from both longitudinal ends of the electrode plate 110 by a predetermined gap. For instance, the first coupling part 211 may not be in direct contact with the electrode plate 110, so as not to hinder the migration of lithium ions during charging and discharging of the secondary battery.

In an exemplary embodiment, the internal coupling part 210 may include the second coupling part 212 disposed on at least one lateral side of the electrode plate 110 within the separator 120. The internal coupling part 210 may include the second coupling part 212 disposed in a second region 122 on at least one lateral side of the electrode plate 110 within the separator 120.

For example, the second coupling part 212 may be disposed outside one end and/or the other end of the electrode plate 110 in the width direction of the separator 120. The second coupling part 212 may prevent the electrode plate 110 from moving in the width direction inside the separator 120.

For example, the second coupling part 212 may be disposed to be spaced apart from both lateral ends of the electrode plate 110 by a predetermined gap. For instance, the second coupling part 212 may not be in direct contact with the electrode plate 110, so as not to hinder the migration of lithium ions during charging and discharging of the secondary battery.

The internal coupling part 210 proposed in the present disclosure may be disposed outside the electrode plate 110 in the separator 120, which has a larger area than the electrode plate 110, thereby limiting the space in which the electrode plate 110 can move within the separator 120.

In an exemplary embodiment, the first coupling part 211 and the second coupling part 212 may be disposed to be connected to each other, as shown in FIG. 3(b). For example, the internal coupling part 210 may include a connection coupling part 213 that connects the first coupling part 211 and the second coupling part 212. Since the internal coupling part 210 may exhibit fluidity before providing full fixing force to the separator 120, it may flow from the first region 121 formed outside the electrode plate 110 in the longitudinal direction to the second region 122 formed outside the electrode plate 110 in the width direction, thereby forming a continuous structure connecting the first coupling part 211 and the second coupling part 212. Alternatively, the internal coupling part 210 may flow from the second region 122 to the first region 121 to form a continuous connection.

However, it is not limited thereto, and in an exemplary embodiment, the first coupling part 211 and the second coupling part 212 may be disposed to be spaced apart from each other, as shown in FIG. 3(a). For example, by disposing the first coupling part 211 and the second coupling part 212 of the internal coupling part 210 separately from each other, the secondary battery may reduce the overall weight of the electrode assembly 100 by omitting the portion connecting them.

In an exemplary embodiment, the internal coupling part 210 may include at least one of the first coupling part 211 and the second coupling part 212. For example, the secondary battery may include only the first coupling part 211 disposed in the first region 121 of the separator 120, or may include only the second coupling part 212 disposed in the second region 122 of the separator 120. However, it is not limited thereto, and the secondary battery may simultaneously include both the first coupling part 211 and the second coupling part 212 of the separator 120.

In an exemplary embodiment, the separator coupling part 200 may include the external coupling part 220 that is disposed on the outer side of the edge of the separator 120 to couple the separators 120. For example, the external coupling part 220 may be formed by applying an adhesive to the outer side of the separator 120 on which a plurality of separators are stacked. At least a partial region of the external coupling part 220 may be disposed in contact with a support film 300 described below. At least a partial region of the external coupling part 220 may also be disposed to be enclosed by the support film 300.

In an exemplary embodiment, the separator coupling part 200 may be injected from the outer side of the edge of the separator 120 toward the electrode plate 110. For example, the internal coupling part 210 may be injected from the outer side of the edge of the separator 120 toward the electrode plate 110. For instance, the separator coupling part 200 may be formed by injecting an adhesive in a fluid state from the outer side of the edge of the separator 120.

For example, in the separator coupling part 200 of the secondary battery, the internal coupling part 210 may be formed by a portion of the adhesive forming the external coupling part 220 flowing inward from the separator 120. In this case, since the adhesive forming the separator coupling part 200 of the secondary battery is injected from the outer side of the electrode assembly 100, the injection process may be simplified.

When the internal coupling part 210 is injected from the outer side of the separator 120, a portion of the adhesive forming the external coupling part 220 may penetrate between the separators 120, such that the internal coupling part 210 may not be formed between some of the separators 120.

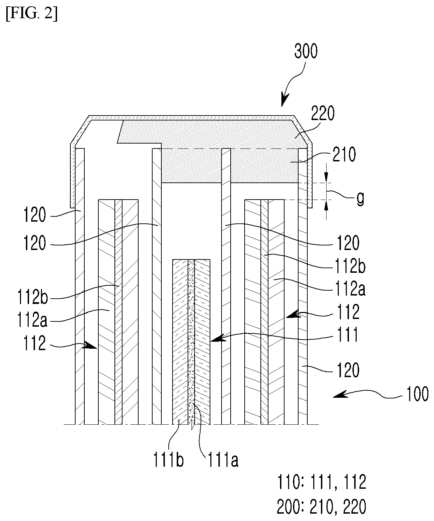

FIG. 2 is a schematic cross-sectional view of the secondary battery including the separator coupling part 200 and the support film 300 in an exemplary embodiment of the present disclosure.

Therefore, referring to FIG. 2, in an exemplary embodiment, the secondary battery may include the support film 300 that tapes at least partial regions of the separators 120 of the electrode assembly 100. The support film 300 may support and connect the edges of the plurality of separators 120.

In an exemplary embodiment, the support film 300 may be disposed at the edge of the separator 120 so as to enclose at least a portion of the separator coupling part 200.

The support film 300 may provide additional support force to the separator 120 even when the separator coupling part 200 is not disposed on some of the separators 120 among all the separators 120 in the stacking direction.

The support film 300 may be disposed to enclose the external coupling part 220, thereby allowing the edge of the electrode assembly 100 to maintain an even surface, even when the external coupling part 220 is exposed on the outside of the electrode assembly 100, resulting in uneven outer surface of the electrode assembly 100. That is, even when the flatness and surface roughness of the appearance of the electrode assembly 100 are inconsistent due to the external coupling part 220, the support film 300 may allow the surface of the electrode assembly 100 to maintain a uniform shape, thereby facilitating subsequent processes for manufacturing the secondary battery.

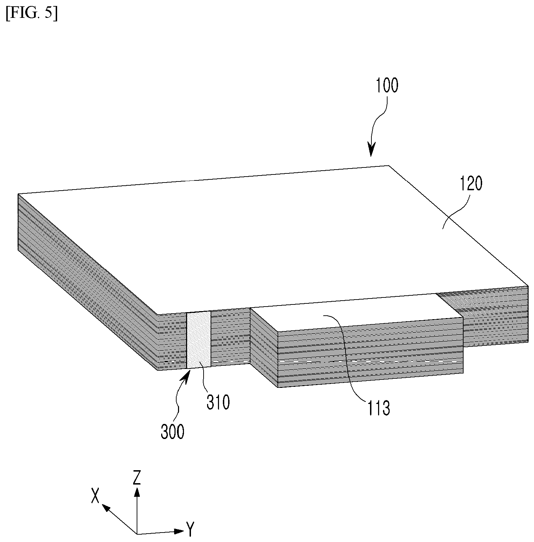

FIGS. 4 and 5 are perspective views schematically illustrating a state in which the support film 300 is disposed in an exemplary embodiment of the present disclosure.

Referring to FIG. 4, in the exemplary embodiment, the support film 300 may include an external support region 310 that is disposed across the outer side of the edge of the separator 120 in the stacking direction. In addition, the support film 300 may further include an internal support region 320 that is connected to an end of the external support region 310 and is in contact with the outer surface of the separator 120 disposed at the outermost side in the stacking direction of the electrode assembly 100.

The support film 300 may achieve excellent support force for the plurality of separators 120 by being adhered to the outermost separator 120 in the stacking direction through the internal support region 320.

However, it is not limited thereto, and referring to FIG. 5, in an exemplary embodiment, the support film 300 may include only the external support region 310.

Generally, the separator 120 has a very thin thickness of 5 µm to 30 µm, if the support film 300 is disposed to contact only the edge of the separator 120, it may be difficult to achieve sufficient adhesive strength for the plurality of separators 120.

However, as shown in FIG. 2, in the support film 300 of the present disclosure, at least a partial region of the external support region 310 may be disposed in contact with the external coupling part 220 of the separator coupling part 200 to enclose the external coupling part 220. Accordingly, the secondary battery of the present disclosure may achieve sufficient support force for the plurality of separators 120 through the adhesive strength between the external support region 310 and the external coupling part 220 even when the support film 300 includes only the external support region 310.

Referring to FIG. 2 again, in an exemplary embodiment, at least a partial region of the external support region 310 of the support film 300 may be disposed to be spaced apart from the edge of the separator 120 by a predetermined gap. For example, the external coupling part 220 of the separator coupling part 200 may be disposed in a space where the external support region 310 is spaced apart from the edge of the separator 120. In the present disclosure, by defining a spaced-apart region between the external support region 310 of the support film 300 and the edge of the separator 120, sufficient space may be provided to form the external coupling part 220 even when the adhesive forming the separator coupling part 200 is injected from the inner side of the edge of the separator 120.

In an exemplary embodiment, the separator coupling part 200 may be injected from the inner side of the edge of the separator 120. For example, the internal coupling part 210 may be injected from the inner side of the edge of the separator 120. For example, the separator coupling part 200 may be formed by injecting an adhesive in a fluid state from the inner side of the edge of the separator 120.

For example, the separator coupling part 200 may be formed by injecting an adhesive in a viscous state from the inner side of the separator 120 to form the internal coupling part 210, and a portion of the internal coupling part 210 may flow toward the outer side of the edge to form the external coupling part 220.

However, it is not limited thereto, and the secondary battery may be formed by controlling the amount of adhesive injected into the inner side of the separator 120 such that only the internal coupling part 210 is formed in the electrode assembly 100, and the external coupling part 220 may not be formed.

In an exemplary embodiment, when the internal coupling part 210 is injected from the outer side of the separator 120, a portion of the adhesive forming the external coupling part 220 may penetrate between the separators 120, so that the internal coupling part 210 may not be formed between some of the separators 120. Therefore, in the present disclosure, the adhesive may be injected from the inner side of the separator 120 so that the internal coupling part 210 can be uniformly disposed between the respective separators 120.

In an exemplary embodiment, the separator coupling part 200 may be formed by being injected from the inner side of the edge of the separator 120 through a secondary battery manufacturing device 400. For example, the internal coupling part 210 may be formed by being injected from the inner side of the edge of the separator 120.

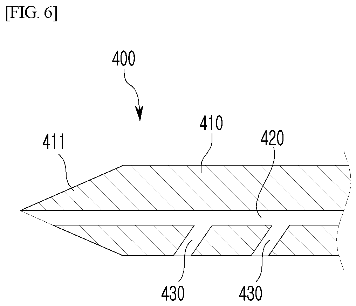

FIG. 6 is a cross-sectional view schematically illustrating the secondary battery manufacturing device 400 according to an exemplary embodiment of the present disclosure.

Hereinafter, a process of forming the internal coupling part 210 from the inner side of the edge of the plurality of separators 120 that are stacked on each other in the electrode assembly 100 through the secondary battery manufacturing device 400 will be described in detail with reference to FIG. 6.

Referring to FIG. 6, the secondary battery manufacturing device 400 according to an exemplary embodiment of the present disclosure may include a body part 410, a main flow path 420, and a sub flow path 430.

The body part 410 may extend in the stacking direction of the separators 120 by a predetermined length. The body part 410 may be configured to penetrate at least some of the separators 120 that are stacked to form the electrode assembly 100 in the stacking direction. For example, the body part 410 may include a tapered section 411 whose diameter deceases toward a longitudinal end. That is, the body part 410 may easily penetrate the separator 120 through the tapered section 411 formed at the longitudinal end.

The body part 410 may include a flow path formed therein, through which an adhesive flows to form the separator coupling part 200 (e.g., the internal coupling part 210).

The main flow path 420 may be disposed inside the body part 410. The main flow path 420 may extend in the longitudinal direction of the body part 410 within the body part 410. An adhesive having flowability may flow through the main flow path 420.

In an exemplary embodiment, a longitudinal end of the main flow path 420 may be in communication with the outside through the longitudinal end of the body part 410. For example, the longitudinal end of the main flow path 420 may be formed in contact with the tapered section 411 formed at the longitudinal end of the body part 410, thereby allowing communication with the outside.

The sub flow path 430 may be disposed inside the body part 410. The sub flow path 430 may branch from one side of the main flow path 420, and an end thereof may be in communication with the outside through an outer surface of the body part 410. For example, one end of the sub flow path 430 may be in communication with the main flow path 420, and the other end may be in communication with the outside through the outer surface of the body part 410.

For example, a plurality of sub flow paths 430 may be disposed to be spaced apart from each other. At this time, the spacing between the sub flow paths 430 may be set to match the spacing between the separators 120. The other end of each sub flow path 430 may be disposed between the separators 120 that face each other.

The secondary battery manufacturing device 400 of the present disclosure may provide the separator coupling part 200 between the separators 120 that face each other through the main flow path 420 and the sub flow path 430, while the body part 410 penetrates at least some of the separators 120.

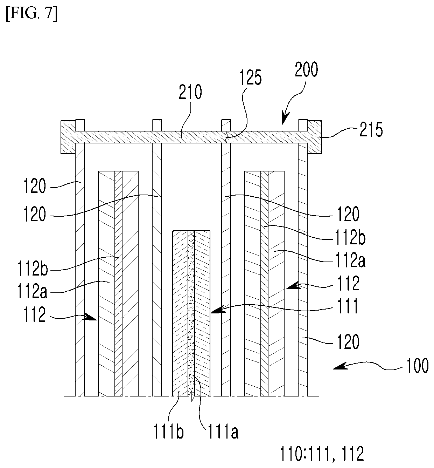

FIGS. 7 to 9 are schematic cross-sectional views of a secondary battery including the separator coupling part 200 in another embodiment of the present disclosure.

Referring to FIGS. 7 to 9, the separator coupling part 200 may be formed by being injected from the inner side of the separators 120, which are stacked on each other in the electrode assembly 100, through the above-described secondary battery manufacturing device 400.

In an exemplary embodiment, at least one through-hole 125 penetrating in the stacking direction may be formed in the plurality of separators 120 constituting the stacked electrode body, and the internal coupling part 210 may be disposed to be continuous through the through-hole 125.

For example, the through-hole 125 may be formed in the process in which the body part 410 of the secondary battery manufacturing device 400 penetrates the separator 120. For instance, the through-hole 125 may be formed during the process in which the tapered section 411 of the body part 410 penetrates the separator 120. However, it is not limited thereto, and for example, the through-hole 125 may be pre-formed before the process of forming the separator coupling part 200.

Referring to FIG. 7, in an exemplary embodiment, the internal coupling part 210 may be disposed to pass through the plurality of separators 120 so as to be continuous in the stacking direction. For example, an end of the internal coupling part 210 in the stacking direction may be coupled to the outer surface of the separator 120 disposed at the outermost side in the stacking direction of the electrode assembly 100, thereby increasing the support force for the separator 120. The internal coupling part 210 may include a third coupling part 215 disposed on the outer surface of the separator 120 located at the outermost side in the stacking direction. In addition, in the present disclosure, by disposing the internal coupling part 210 to penetrate all of the separators 120 in the stacking direction, the possibility that the internal coupling part 210 does not penetrate between some of the separators 120 among all the separators 120 may be minimized.

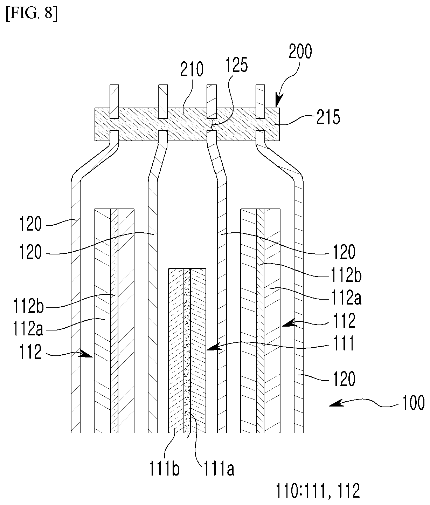

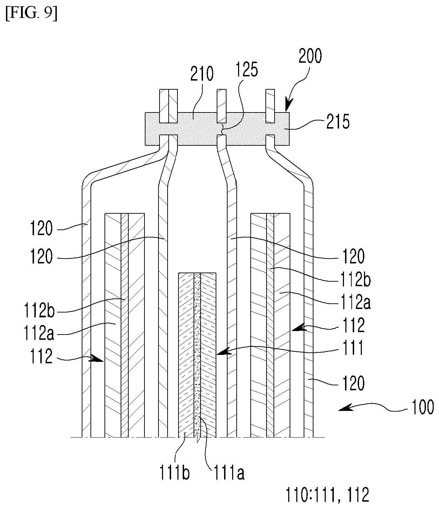

Referring to FIGS. 8 and 9, in an exemplary embodiment, the internal coupling part 210 may be disposed in a portion of the separator 120 that does not face the electrode plate 110, and the electrode assembly 100 may have a thickness in the stacking direction such that the stacking-direction thickness of the portion where the internal coupling part 210 is disposed is smaller than that of the portion where the separator 120 faces the electrode plate 110.

For example, in the secondary battery of the present disclosure, if the internal coupling part 210 is disposed to penetrate at least some of the separators 120 among all the separators 120, the electrode assembly 100 may be fabricated by compressing the portion where the internal coupling part 210 is disposed in the stacking direction. Accordingly, even if the internal coupling part 210 does not penetrate between some of the separators 120 among all the separators 120, the internal coupling part 210 may pass through the entire set of separators 120 via the through-hole 125.

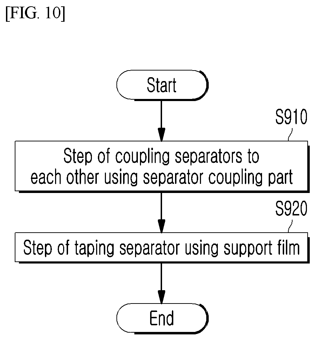

FIG. 10 is a flowchart of a method for manufacturing a secondary battery according to an exemplary embodiment of the present disclosure.

Referring to FIG. 10, the method for manufacturing a secondary battery may include a coupling step (S910) of coupling a plurality of separators 120, which are stacked to be spaced apart from each other, to each other using the separator coupling part 200.

In the coupling step (S910) according to an exemplary embodiment, the separator coupling part 200 may be injected from the inner side of the edge of the separator 120. For example, the internal coupling part 210 of the separator coupling part 200 may be placed on the inner side of the separator 120 through the above-described secondary battery manufacturing device 400. However, it is not limited thereto, and in the coupling step (S910), the separator coupling part 200 may alternatively be injected from the outer side of the edge of the separator 120 toward the electrode assembly 100.

The method for manufacturing a secondary battery may include a taping step (S920) of taping at least partial regions of the separators 120 using the support film 300.

In an exemplary embodiment, the taping step (S920) may be performed after the coupling step (S910), but it is not limited thereto, and may also be performed before the coupling step (S910), or simultaneously with the coupling step (S910).

In the method for manufacturing a secondary battery of the present disclosure, when the coupling step (S910) and the taping step (S920) are completed, the support film 300 may be disposed such that its inner surface is in contact with at least a portion of the separator coupling part 200. Through this, the secondary battery of the present disclosure may enhance the support force for the separator 120 through the support film 300, and facilitate subsequent processes for manufacturing the secondary battery by maintaining a uniform shape on the surface of the electrode assembly 100.

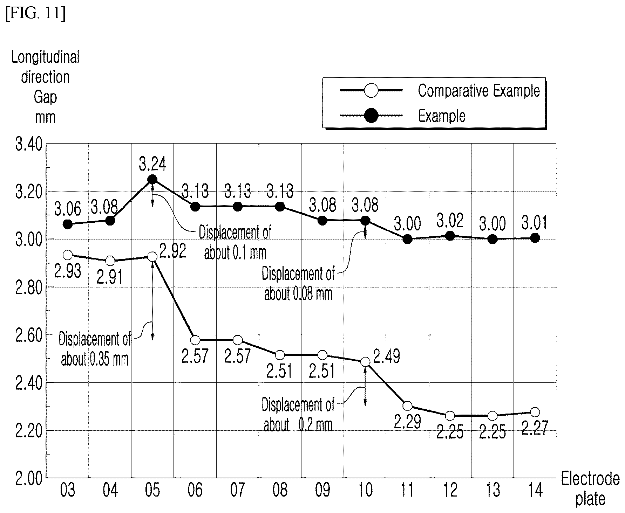

Meanwhile, FIG. 11 is a graph showing the effect of enhanced electrode alignment through the secondary battery according to an exemplary embodiment of the present disclosure.

Referring to FIG. 11, in the secondary battery according to the exemplary embodiment of the present disclosure, the effect of enhancing the alignment of the electrode plates 110 disposed between the separators 120 was confirmed by disposing the separator coupling part 200 between the separators 120 of the electrode assembly 100.

In FIG. 11, an adhesive was used as a coupling means for forming the separator coupling part 200, and specifically, a hot melt material having relatively high viscosity was used to form the first coupling part 211 in the first region 121 of the separator 120, and the alignment of the electrode plates 110 in the longitudinal direction was evaluated.

Specifically, the alignment of the electrode plates 110 was assessed by measuring the gap between the longitudinal end of each electrode plate 110 and the edge of the corresponding separator 120. In the graph of FIG. 11, it was confirmed that, based on the fifth electrode plate 110 and the sixth electrode plate 110, a positional displacement of about 0.35 mm occurred in the secondary battery (comparative example) where the separator coupling part 200 is not disposed, whereas in the electrode assembly 100 of the secondary battery according to the exemplary embodiment, only about 0.11 mm of positional displacement occurred.

In addition, based on the 10th electrode plate 110 and the 11th electrode plate 110, it was confirmed that in the secondary battery (comparative example) where the separator coupling part 200 is not disposed, a positional displacement of about 0.2 mm occurred, whereas in the electrode assembly 100 of the secondary battery according to the exemplary embodiment, only about 0.08 mm of positional displacement occurred.

That is, in the case of the electrode assembly 100 including the separator coupling part 200 according to the exemplary embodiment, it was confirmed that the positional displacement of the electrode plates 110 was reduced by about 71% and 60%, respectively, compared to the comparative example.

In the above, although the embodiments of the present disclosure have been described with all components combined in one or operating in combination, the present disclosure is not necessarily limited to such embodiments. Within the scope of the purpose of the present disclosure, all components may be selectively combined in one or more and operate accordingly. Unless otherwise defined, all terms including technical or scientific terms have the same meanings as commonly understood by those skilled in the art to which the present disclosure pertains. Commonly used terms, such as those defined in dictionaries, should be interpreted in accordance with the contextual meaning in the relevant technical field, and unless explicitly defined in the present disclosure, shall not be interpreted in an idealized or unduly formal sense.

The above description is merely illustrative of the technical spirit of the present disclosure, and it will be appreciated by those skilled in the art to which the present disclosure pertains that various modifications and alterations can be made without departing from the essential characteristics of the present disclosure. Therefore, the embodiments disclosed herein are intended to describe, not to limit, the technical spirit of the present disclosure, and the scope of the technical spirit is not limited to these embodiments. The scope of protection of the present disclosure shall be defined by the following claims, and all technical ideas that fall within the equivalent scope shall be construed as being included within the scope of the present disclosure.

## Claims

1. A secondary battery comprising:
an electrode assembly comprising separators stacked to enclose each of a plurality of electrode plates disposed therein; and
a separator coupling part disposed on one side of the electrode assembly to support the separators,
wherein the separator coupling part comprises an internal coupling part disposed on an inner side of an edge of the separator to couple at least partial regions of the separators that face each other.

2. The secondary battery according to claim 1, wherein the separator coupling part comprises an external coupling part disposed on an outer side of the edge of the separator to couple the separators.

3. The secondary battery according to claim 1 or 2, wherein the internal coupling part comprises a first coupling part disposed on at least one longitudinal side of the electrode plate within the separator.

4. The secondary battery according to any one of claims 1 to 3, wherein the internal coupling part comprises a second coupling part disposed on at least one lateral side of the electrode plate within the separator.

5. The secondary battery according to any one of claims 1 to 4, wherein the internal coupling part is injected from the outer side of the edge of the separator toward the electrode plate.

6. The secondary battery according to any one of claims 1 to 5, wherein the internal coupling part is injected from the inner side of the edge of the separator.

7. The secondary battery according to any one of claims 1 to 6, further comprising a support film configured to tape at least partial regions of the separators,
wherein the support film comprises an external support region disposed across the outer side of the edge of the separator in the stacking direction.

8. The secondary battery according to claim 7, wherein at least a portion of the external support region is in contact with the external coupling part.

9. The secondary battery according to claim 7 or 8, wherein at least a portion of the external support region is disposed to be spaced apart from the edge of the separator by a predetermined gap.

10. The secondary battery according to any one of claims 1 to 9, wherein at least one through-hole penetrating in the stacking direction is formed in the separators, and
the internal coupling part is disposed to be continuous through the through-hole.

11. The secondary battery according to any one of claims 1 to 10, wherein the internal coupling part is disposed in a portion of the separator that does not face the electrode plate, and
the electrode assembly has a thickness in the stacking direction such that the stacking-direction thickness of the portion where the internal coupling part is disposed is smaller than that of the portion where the separator faces the electrode plate.

12. A device for manufacturing a secondary battery comprising:
a body part configured to penetrate at least some of a plurality of separators that are stacked to form an electrode assembly in the stacking direction;
a main flow path extending in a longitudinal direction of the body part within the body part; and
a sub flow path branching from one side of the main flow path and having an end in communication with the outside through an outer surface of the body part,
wherein the secondary battery manufacturing device provides a separator coupling part between the separators that face each other through the main flow path and the sub flow path, while the body part penetrates at least some of the separators.

13. The device for manufacturing a secondary battery according to claim 12, wherein the body part comprises a tapered section whose diameter decreases toward a longitudinal end.

14. A method for manufacturing a secondary battery comprising:
a coupling step of coupling a plurality of separators, which are stacked to be spaced apart from each other, to each other using a separator coupling part; and
a taping step of taping at least partial regions of the separators using a support film,
wherein the support film is disposed such that its inner surface is in contact with at least a portion of the separator coupling part.

15. The method for manufacturing a secondary battery according to claim 14, wherein, in the coupling step, the separator coupling part is injected from an inner side of an edge of the separator.
